# EUROPEAN PATENT SPECIFICATION

(11) **EP 4 765 020 B1**
(45) Date of publication and mention of the grant of the patent: **21.10.2026**
(21) Application number: 24220655.5
(22) Date of filing: 17.12.2024
(51) Int. Cl.: G06T 7/277

(54) **METHOD, DEVICE AND SYSTEM FOR TRACKING AN OBJECT IN A SEQUENCE OF VIDEO FRAMES**
VERFAHREN, VORRICHTUNG UND SYSTEM ZUR VERFOLGUNG EINES OBJEKTS IN EINER SEQUENZ VON VIDEOBILDERN
PROCÉDÉ, DISPOSITIF ET SYSTÈME DE SUIVI D'UN OBJET DANS UNE SÉQUENCE DE TRAMES VIDÉO

(43) Date of publication of application: 24.06.2026
(73) Proprietor: Axis AB, 223 69 Lund (SE)
(72) Inventor: Danielsson, Niclas, 223 69 LUND (SE); Danielsson Fan, Xing, 223 69 LUND (SE)
(74) Representative: AWA Sweden AB

(56) References cited:
- BECKER STEFAN ET AL: "On the Benefit of State Separation for Tracking in Image Space with an Interacting Multiple Model Filter", 7 May 2016, 20160507, PAGE(S) 3 - 11, XP047550842
- XU HA NING ET AL: "Algorithm of maneuvering target tracking for video based on UKF and IMM", IEEE CONFERENCE ANTHOLOGY, IEEE, January 2013 (2013-01-01), pages 1 - 4, XP032585186, DOI: 10.1109/ANTHOLOGY.2013.6784905
- WENG HAO ET AL: "Interactive Multiple Model Filter Algorithm for Multi-Object Tracking of Unmanned Surface Vessels", 2024 IEEE INTERNATIONAL CONFERENCE ON UNMANNED SYSTEMS (ICUS), IEEE, 18 October 2024 (2024-10-18), pages 175 - 181, XP034814316, DOI: 10.1109/ICUS61736.2024.10839931

## Description

### Technical field

The present invention relates to the field of object tracking in video. In particular, it relates to a method, a device, and a system for tracking an object in a sequence of video frames.

### Background

Tracking objects a video is a common task in computer vision. For example, in a surveillance application, it is of interest to track persons in the video of a monitored scene. This can be used to count persons, raise alarms when a person passes into a forbidden area, or spends too much time in a certain area of the scene.

Object tracking commonly involves the use of a tracking filter which tracks states of the object, such as position, velocity and acceleration. A tracking filter is a recursive algorithm for evolving a state vector which describes the states of the object as detections of the object are made in the video. For this purpose, the tracking filter uses a motion model to predict the state vector of the object at a future time point, and a measurement model to update the predicted state vector in case a detection of the object is made in a video frame at the future time point.

The performance of the tracking filter depends, among other things, on the motion model being used. Common choices are a constant velocity model, in which the tracking filter tracks position and velocity of the object under the assumption that the velocity is constant, and a constant acceleration model, in which the tracking filter additionally tracks acceleration of the object under the assumption that the acceleration is constant. Each of these motion models have their advantages and disadvantages. On the one hand, the constant velocity model shows a good performance and provides smooth state estimates when the object approximately moves at a constant velocity. However, it will struggle to track the object when the object suddenly changes its speed or direction which may result in the track of the object being lost. On the other hand, the constant acceleration model can better adapt to sudden speed and direction changes of the object. However, it tends to provide noisier state estimates as it is also more susceptible to changes caused by noise in the detections. Accordingly, it can be difficult to select which motion model to use in the tracking filter. There is thus room for improvements.

### Summary of the invention

In view of the above, it is thus an object of the present invention to mitigate the above problems and provide a tracking filter which can adapt to sudden speed and direction changes of the object and still provide smooth state estimates.

According to a first aspect, the above object is achieved by a method for tracking an object in a sequence of video frames, comprising:
tracking an object in a sequence of video frames by operating a tracking filter in a first mode in which it estimates a state vector describing a position and velocity of the object in the video frames,
wherein the tracking filter estimates a state vector at a current time point from a state vector at an earlier time point and a detection of the object in a current video frame corresponding to the current time point,
receiving, from a video encoder which encodes the sequence of video frames, one or more motion vectors indicative of velocity in an object detection area of the current video frame that corresponds to the detection of the object,
determining a velocity difference between the velocity in the state vector at the earlier time point and the velocity indicated by the one or more motion vectors in the object detection area of the current video frame, and
in response to the velocity difference being larger than a velocity threshold, switching from operating the tracking filter in the first mode to operating the tracking filter in a second mode at the current time point, wherein the tracking filter in the second mode estimates a state vector describing position, velocity, and acceleration of the object in the video frames.

The proposed tracking filter is hence operable in two modes. In the first mode, the tracking filter estimates a state vector which describes position and velocity of the object. By not having an acceleration state in the state vector in the first mode, the tracking filter is made less responsive to sudden changes in speed and direction of the object. This is beneficial when the object makes no major speed or direction changes since the tracking filter also will be less responsive to changes that are caused by noise in the detections, hence providing smoother state estimates. In the second mode the state vector additionally includes acceleration of the object. The acceleration state makes the tracking filter more responsive to sudden changes in speed and direction of the object and is hence beneficial when the object makes sudden speed or direction changes.

The inventors have realized that by switching between operating the tracking filter in the first mode and the second mode, one can achieve the advantages of both modes and minimize the impact of their disadvantages. The idea is to use the first mode when the object makes no major velocity changes to achieve the advantage of smooth state estimates, and switch to use the second mode when it is detected that the object velocity suddenly changes to achieve the advantage of being more responsive to the velocity change.

In order to detect that the object velocity suddenly changes, secondary motion information is used in the form of motion vectors from a video encoder which encodes the video sequence in which the object is tracked. These motion vectors give an indication of the current velocity of the object. By comparing the velocity indicated by the motion vectors from the video encoder to the velocity estimate of the tracking filter it is possible to get an early indication when the velocity of the object suddenly starts to change. When that happens, the tracking filter is switched from the first mode to the second mode.

By a *tracking filter* is meant an algorithm which uses a series of noisy measurements observed over time to produce estimates of unknown variables. The tracking filter may also be referred to as a statistical motion filter. By way of example, the tracking filter may be a Kalman filter, an extended Kalman filter, or a statistical particle filter. The unknown variables may include position, velocity, and possibly also acceleration of the object. These unknown variables are also referred to as states and may be arranged in a *state vector.*

The tracking filter is operable in a *first mode* and a *second mode.* These two modes differ in that the tracking filter uses different state space models to model the state vector. In the first mode, the state space model models position and velocity, but not acceleration, of the object. Hence the state vector includes the states position and velocity, but not acceleration, in the first mode. In the second mode, the state space model models position, velocity, and acceleration of the object. The state vector thus includes the states position, velocity, and acceleration in the second mode.

The *position, velocity,* and *acceleration* typically refer to the position, velocity and acceleration of the object in an image plane of the video frames. A position refers to a pixel position of the object in the video frame. A velocity refers to a pixel velocity of the object in the video frames, i.e., a change in pixel position per time unit. An acceleration refers to pixel acceleration of the object in the video frames, i.e., a change in pixel velocity per time unit. However, in embodiments, the tracking is rather performed in a two- or three-dimensional coordinate system of a scene depicted by the sequence of video frames, such as in a two-dimensional top-down map of the scene or a three-dimensional map of the scene. In such embodiments, the position velocity, and acceleration refer to the position, velocity and acceleration in the two- or three-dimensional coordinate system of the scene.

By *switching* from operating the tracking filter in the first mode to operating the tracking filter in the second mode is meant that the tracking filter switches from using the state space model of the first mode to using the state space model of the second mode when estimating the state vector of the object.

Switching from operating the tracking filter in the first mode to operating the tracking filter in the second mode at the current time point may include extending the state vector at the current time point with an acceleration state describing the acceleration of the object. Thus, at the current time point when the velocity discrepancy is detected an acceleration state is added to the state vector.

When the acceleration term is added to the state vector at the current time point it has to be initialized, i.e., set to a start value. In one embodiment, the acceleration state is initialized to zero at the current time point. In that case, the acceleration state will adapt to the acceleration of the object as detections are made in future frames thanks to the state evolution of the tracking filter.

In another embodiment, the acceleration state is initialized at the current time point to an acceleration that corresponds to the velocity difference. The velocity difference gives an indication of how the velocity of the object has changed between the earlier time point and the current time point. Hence, dividing the velocity difference by the time difference between the current time point and the earlier time point provides an estimate of the acceleration of the object. By making an initial estimate of the acceleration in this way and using it to initialize the acceleration state, the tracking filter will adapt faster to the acceleration of the object than if the acceleration state simply is initialized to zero.

In yet another embodiment, the acceleration state is initialized such that the state vector at the earlier time point together with the acceleration state results in a predicted state vector at the current time point that matches the detection of the object in the current video frame. This is another way of making an initial estimate of the acceleration state that allows the tracking filter to faster adapt to the acceleration of the object than if the acceleration state simply is initialized to zero.

In both of these embodiments, the extended state vector is used when estimating the state vector after the current time point. Thus, the switch from the first mode to the second mode takes place at the current time point by extension of the state vector, and then the tracking filter operates in the second mode at least after the current time point by estimating the extended state vector.

The tracking filter uses a motion model for predicting a state vector from a time point to a successive time point, wherein the motion model is a constant velocity motion model in the first mode and a constant acceleration motion model in the second mode. The switching from the first mode to the second mode upon detecting a sudden velocity change may hence involve switching motion model. By using a constant velocity motion model in the first mode, the tracking filter is less sensitive to noise in the detections and will provide smooth state vector estimates. By using a constant acceleration model in the second mode the tracking filter is more responsive to velocity changes.

Furthermore, if a detection of the object is made in a successive video frame corresponding to the successive time point, the tracking filter updates the predicted state vector at the successive time point in view of the detection of the object in the successive video frame in each of the first and the second mode. Thus, at time points in which no detection of the object is made, the estimate of the state vector is equal to the state vector predicted using the motion model of the currently applied mode. However, at time points in which a detection of the object is made, the estimate of the state vector further takes the detection into account. In this way, the tracking filter adapts its estimates of the state vector to the true motion of the object when it departs from the motion model.

The video encoder typically determines motion vectors for pixel blocks in the video frames, such as blocks of 8x8 or 16x16 pixels. The object detection area in the current video frame may cover more than one pixel block and hence be associated with a plurality of motion vectors. In such situations, the velocity indicated by the one or more vectors in the object detection area of the current video frame may be a velocity indicated by a representative motion vector of the one or more motion vectors. For example, the representative motion vector may be an average motion vector.

The one or more motion vectors may correspond to a displacement between the current video frame and a reference frame used by the video encoder in the encoding, and wherein the method may further comprise calculating the velocity indicated by the one or more motion vectors by dividing the displacement by the temporal distance between the current video frame and the reference frame. In this way, the displacement given by a motion vector is translated into a velocity which can be used to determine the velocity difference in relation to the velocity in the state vector at the earlier time point.

The method may further comprise monitoring the acceleration in the estimated state vector when the tracking filter is operating in the second mode, and switching from operating the tracking filter in the second mode to operating the tracking filter in the first mode in response to the acceleration in the estimated state vector having stabilized at a level below an acceleration threshold. In this way, the tracking filter can switch back to the first mode when the acceleration has stabilized at a low level, which is an indication that there currently are no big changes in the velocity of the object that the tracking filter needs to adapt to. Thus, the tracking filter is controlled to operate in the first mode when the acceleration of the object is low to get the benefit of smooth state estimates, and to operate in the second mode when the acceleration of the object is high to get the benefit of responsiveness to velocity changes.

The acceleration may be determined to have stabilized at a level below the acceleration threshold when the acceleration in the state vector has been below the acceleration threshold for a predetermined time period. By requiring that the acceleration has been below the acceleration threshold for a predetermined time period it can be avoided that the tracking filter switches back and forth between the first and the second mode when the acceleration temporarily falls below the acceleration threshold.

The switching from operating the tracking filter in the second mode to operating the tracking filter in the first mode includes removing an acceleration state describing the acceleration of the object from the state vector. It may further include switching from using a constant acceleration motion model to using a constant velocity motion model.

According to a second aspect, the above object is achieved by a device for tracking an object in a sequence of video frames. The device comprises circuitry configured to perform the steps of the method of the first aspect.

According to a third aspect, the above object is achieved by a system. The system comprises a video encoder configured to encode the sequence of video frames and produce motion vectors indicative of velocity in different areas of the video frames, an object detector configured to detect an object in video frames of the sequence of video frames, and a device for tracking an object in a sequence of video frames according to the second aspect, wherein the device receives motion vectors from the video encoder and object detections from the object detector.

According to a fourth aspect, the above object is achieved by a non-transitory computer-readable medium comprising computer program code which, when executed by a device with processing capability, causes the device to carry out the method of the first aspect.

The second, third, and fourth aspects may generally have the same features and advantages as the first aspect. It is further noted that the invention relates to all possible combinations of features unless explicitly stated otherwise.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 illustrates a scene captured by a camera.
Fig. 2 schematically illustrates a system for tracking an object in a sequence of video frames according to embodiments.
Fig. 3 schematically illustrates the performance of a tracking filter when operating in a first mode only and in a second mode only.
Fig. 4 is a flowchart of a method for tracking an object in a sequence of video frames according to embodiments.
Fig. 5 illustrates successive time points at which a tracking filter estimates a state vector by switching between two modes of operation according to embodiments.
Fig. 6 schematically illustrates motion vectors in a video frame in which an object is detected in an object detection area.
Fig. 7 schematically illustrates acceleration estimated by the tracking filter as a function of time.
Fig. 8 schematically illustrates the performance of a tracking filter when switching between a first mode and a second mode according to embodiments.
Fig. 9 illustrates a device for tracking an object in a sequence of video frames according to embodiments.

### Detailed description of embodiments

The present invention will now be described more fully hereinafter with reference to the accompanying drawings, in which embodiments of the invention are shown.

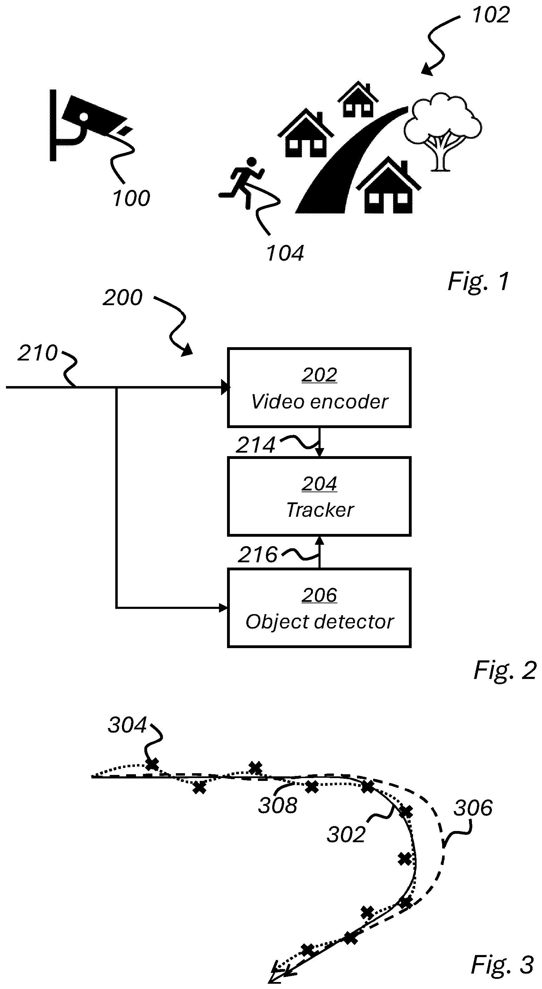

Fig. 1 illustrates a camera 100 monitoring an exemplary scene 102 in which there is a moving object 104 that should be tracked over time. The object 104 may for instance be a person or a vehicle. The camera 100 is a video camera which captures a sequence of video frames depicting the scene 102.

The sequence of video frames captured by the camera 100 may be processed by the system 200 shown in Fig. 2 to track the object 104. The system 200 may be fully implemented in the camera 100, partially implemented in the camera 100, or may be provided separately from the camera 100. The system 200 comprises a video encoder 202, a device 204 for tracking the object in a sequence of video frames, and an object detector 206. The device 204 will be referred to as tracker 204 in the following.

The sequence of video frames 210 is provided as input to the system 200. The video encoder 202 encodes the sequence of video frames 210 by using motion compensation. As known in the art, motion compensation is a technique used to predict a video frame in a video sequence in relation to a reference video frame, which typically corresponds to a another video frame in the sequence such as a previous video frame, a later video frame, or both a previous and later video frame in the sequence. When the reference frame is a previous video frame in the video sequence, the encoded video frame is referred to as a P-frame, and when the reference frame includes a later video the encoded video frame is referred to as a B-frame. For example, when a video frame captured at time *tᵢ* is encoded as a P-frame, the reference frame may correspond to the directly preceding video frame captured at time *tᵢ* in the video sequence. Motion compensation is implemented by most video coding standards, such as the H.26x, AV1, and VP9 standards. To implement the motion compensation for a video frame to be encoded, the video encoder 202 determines motion vectors for pixel blocks in the video frame by performing a motion vector search in the reference video frame. In more detail, for a pixel block to be encoded, the video encoder 202 searches within a search window in the reference video frame for a pixel block that gives a best match according to some criteria. For instance, the best matching pixel block may minimize a sum of absolute differences relative to the block to be encoded. The motion vector of a pixel block is then the vector that points from the pixel block in the video frame to be encoded to the best matching block in the reference frame found during the motion vector search. The motion vector of a pixel block may hence be seen as a displacement of the image contents in a pixel block in the video frame to be encoded in relation to the reference frame. In other words, the motion vector is indicative of a velocity in a pixel block of a video frame, i.e., it provides a measure of how much and in which direction the image content in the pixel block has moved during the time period between the video frame and the reference frame.

The sequence of video frames 210 is also provided as input to the object detector 206 which detects objects in the video frames. This involves identifying and locating specific objects within the video frames, typically by determining areas where the objects are located in the video frames, referred to herein as object detection areas. The object detection area may for example be given as a bounding box around the detected object. For this purpose, the object detector 206 may implement an existing object detection algorithm. One approach to object detection involves convolutional neural networks (CNNs) that analyze spatial features across an image to identify patterns associated with different object classes. Object detection models are generally divided into two categories: single-stage and two-stage detectors. Single-stage detectors, like YOLO (You Only Look Once) and SSD (Single Shot MultiBox Detector), predict bounding boxes and class labels directly in a single pass through the network, making them efficient for real-time applications. Two-stage detectors, such as Faster R-CNN (Region-based Convolutional Neural Network), separate the detection process into two steps: generating region proposals and then classifying these proposals, which often results in higher accuracy but slower processing speeds. To implement object detection in practice, an image is first passed through a CNN that generates feature maps. For single-stage models like YOLO, the network directly outputs bounding box coordinates, class labels, and confidence scores for each detected object. For two-stage models like Faster R-CNN, the region proposal network generates initial bounding boxes, which are further processed by a classification network to refine the predictions. Training an object detection model requires a large dataset where each object is annotated with bounding boxes and class labels. The model learns to minimize a multi-part loss function that combines classification loss (for correct labelling) and localization loss (for accurate bounding box prediction). Data augmentation techniques, such as scaling, cropping, and flipping, are commonly used during training to improve the model's robustness and generalization.

The object detector 206 outputs object detections 216 which are indicative of the positions and preferably also class labels of the objects detected in the video frames. For example, the object detections 216 may correspond to a set of object detection areas, such as bounding boxes, with associated class labels and confidence scores, indicating the detected objects and their positions within the video frames.

Motion vectors 214 produced by the video encoder 202 during the encoding process and the object detections 216 from the object detector 206 are provided as input to the tracker 204. The tracker 204 tracks objects detected by the object detector 206 over time in the sequence video frames 210. For this purpose, the tracker 204 uses a tracking filter, also known as a statistical motion filter. By way of example, it may use a Kalman filter, and extended Kalman filter, or a statistical particle filter. A tracking filter is an algorithm that uses a series of noisy measurements observed over time, in this case the object detections 216 provided by the object detector 206, to produce and output estimates of unknown variables. The unknown variables may include position, velocity, and possibly also acceleration of the object. These unknown variables are also referred to as states and may be arranged in a state vector.

The evolution of the states in the state vector between successive time points is modelled by a state space model which includes a motion model and a measurement model. The motion model describes how the state vector *x* evolves from a time point *t -* 1 to a successive time point *t,* i.e., it models the dynamics of the object. For a linear motion model this may be expressed as: ${x}^{t} = {F}^{t} {x}^{t - 1} + {w}^{t} ,$ (Equation 1) where *x^{t}* is the state at time *t, F^{t}* is a state transition matrix which is applied to the previous state vector *x*^{*t*-1}, and *w^{t}* is a process noise. If a Kalman filter is used, the process noise is assumed to follow a zero mean multivariate Gaussian distribution with covariance matrix *Q^{t}* which depends on the time interval Δ*t* between the current time point *t* and the previous time point *t -* 1. Sometimes the process noise is also referred to as system noise.

The measurement model models how the measurement at time *t* relates to the state vector at time *t*. In case of a linear measurement model this can be expressed as: ${z}^{t} = {H}^{t} {x}^{t} + {v}^{t} ,$ (Equation 2) where *H^{t}* is the matrix that relates the state vector at time t to the measurement *z^{t},* and *v^{t}* is an additive measurement noise. If a Kalman filter is used, the measurement noise is assumed to follow a zero mean multivariate Gaussian distribution with covariance matrix *R^{t}*.

The tracker 204 has a tracking filter which is operable in two modes. The tracking filter operates in one of the modes at a time, but as will be explained it can switch between the modes. The state space model of the tracking filter differs between the two modes. Thus, in a first mode a first state space model is used, and in the second state a second state space model is used. The state space model of the first mode models position and velocity of the object. The state vector in the first mode hence describes position and velocity, but not acceleration, of the object. Since the first state space model does not model acceleration, an assumption is made that object has no acceleration and hence moves at constant velocity. The motion model in the state space model of the first mode may therefore be referred to as a constant velocity model. That is, the state transition matrix *F^{t}* of the first state space model is designed such that when applied to the state vector, the velocity terms in the state vectors are left unchanged. Such a state transition matrix may easily set up by using Newton's equations of motion and assuming constant velocity.

The state space model of the second mode models position, velocity, and acceleration of the object. The state vector in the second mode hence describes position, velocity, and acceleration of the object. In the second state space model an assumption is made that the object moves at a constant acceleration. The motion model in the state space model of the second mode may may be referred to as a constant acceleration model. That is, the state transition matrix *F^{t}* of the second state space model is designed such that when the state transition matrix *F^{t}* is applied to the state vector, the acceleration terms are left unchanged. Such a state transition matrix may easily set up by using Newton's equations of motion and assuming constant acceleration.

Each of the two modes have their advantages and disadvantages. Referring to Fig. 3, a true but unknown track 302 of an object in an image plane is shown as a solid line, and noisy measurements 304 of the position of the object are shown by cross-symbols. In this example, it is assumed that the object first moves at a constant velocity, but that it then suddenly changes its direction of movement. The dashed curve 306 illustrates the tracking result of the tracking filter if it were operated in the first mode only, and the dotted curve 308 illustrates the tracking result of the tracking filter if it were operated in the second mode only. As can be seen, the first operation mode works well as long as the object moves at constant velocity. However, as the object suddenly changes its direction the tracking filter responds very slowly and has difficulty in following the true movement of the object. In contrast, the second operation mode works less well as the object moves at constant velocity since it is more adaptive to the fluctuations of the noisy measurements. However, as the object changes its direction its capability to adapt becomes an advantage and it responds much better to the velocity change.

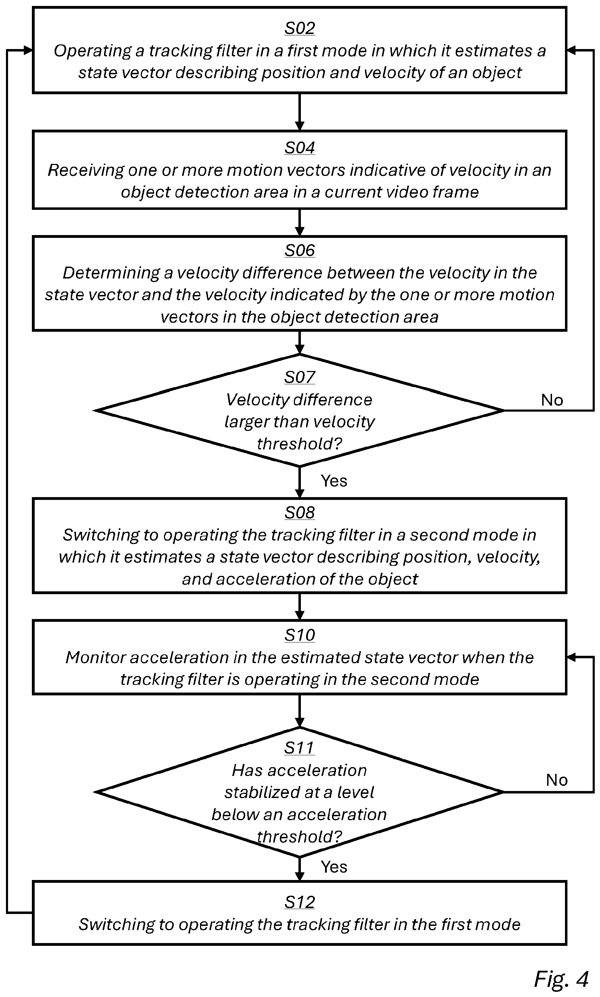

In order to benefit from the advantages of the two modes, and suppress their respective disadvantages, the tracking filter of the tracker 204 is configured to dynamically switch between the two operating modes. The decision to switch is taken by using the motion vectors 214 from the video encoder 202. This will now be described in more detail with reference to Fig. 4, which shows a method for tracking an object in a sequence of video frames. Further reference will also be made to the exemplary scene of Fig.1, and the system of Fig. 2.

In step S02, the tracker 204 tracks an object 104 in a sequence of video frames 210 by operating the tracking filter in the first mode in which it estimates a state vector describing a position and velocity of the object 104 in the video frames 210. In the first mode the tracking filter uses the first state space model described above to model the state vector and its evolution over time.

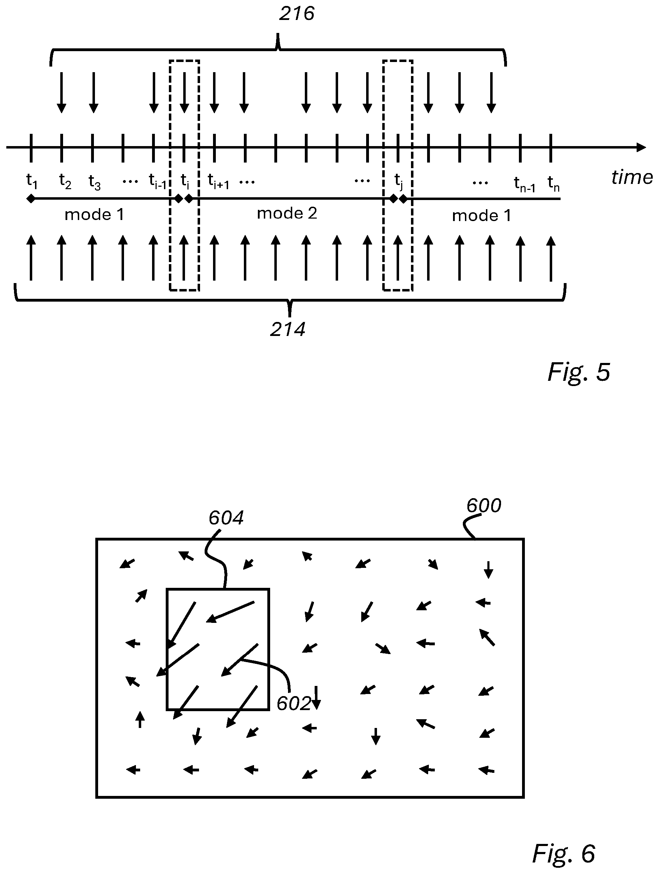

The tracking filter operates at a certain temporal rate to estimate the state vector at successive time points. This is further illustrated in the timeline of Fig. 5 along which the successive time points *tᵢ, i* = 1, 2, ... at which the tracking filter estimates the state vector are shown. Each of these time points corresponds to a video frame in the sequence of video frames 210. The temporal rate of the tracking filter may correspond to the frame rate of the sequence of video frames 210, such as 30 or 60 frames per second, or to a rate at which the object detector 206 operates to detect objects in the sequence of video frames 210, such as 10 frames per second. At some of the successive time points *tᵢ* object detections 216 of the object are received from the object detector 206. As previously mentioned, an object detection may include an object detection area, such as a bounding box, where the object is located in an image frame. As shown in Fig. 5, detections 216 of the tracked object 104 are not necessarily received at each of the time points. For example, the object 104 may be occluded from the camera 100 at some time points and therefore not detectable by the object detector 206.

In order to estimate the state vector, the tracking filter operates in a recursive manner in which it uses the estimate of the state vector at a time point *t*_{*i-*1} to estimate the state vector at the successive time point *tᵢ*. In more detail, the tracking filter uses the motion model of the state space model for predicting a state vector from the time point *t*_{*i-*1} to the successive time point *tᵢ*. When operating in the first mode, the tracking filter uses the constant velocity motion model of the first state space model to perform the prediction. The prediction may involve applying the state transition matrix to the state vector at time *tᵢ* according to: ${\hat{x}}^{{t}_{i}} = {F}^{{t}_{i}} {x}^{{t}_{i - 1}} ,$ (Equation 3) to obtain a predicted state *x̂^{tⁱ}* at time *tᵢ*. In case no detection of the tracked object is received from the object detector 206 at time *tᵢ* the prediction of the state vector becomes the estimation of the state vector at time *tᵢ*. However, in case a detection *z^{tⁱ}* of the object is made at time *tᵢ,* i.e., in a video frame corresponding to the successive time point *tᵢ*, the tracking filter updates the predicted state vector *x̂^{tⁱ}* at the successive time point *tᵢ* in view of the detection *z^{tⁱ}* of the object in the successive video frame. This means that the estimate of the state vector is achieved by combining or weighting together the predicted state vector *x̂^{tⁱ}* and the detection *z^{tⁱ}.* When operating in the first mode, the first state space model is used when updating the state vector. In particular, it defines how to combine or weight together the prediction and the detection. For example, when a Kalman tracker is used, the tracking filter updates the state vector according to: ${x}^{{t}_{i}} = {\hat{x}}^{{t}_{i}} + {K}^{{t}_{i}} \left({z}^{{t}_{i}}-{H}^{{t}_{i}}{\hat{x}}^{{t}_{i}}\right) ,$ (Equation 4) where *K^{t}* is a gain of the filter which depends on the state transition matrix *F^{tⁱ},* the observation matrix *H^{tⁱ},* and the covariance matrices *Q^{tⁱ}* and *R^{tⁱ}* in a per se known manner. Thus, at time points when a detection of the object is made, the tracking filter estimates a state vector at a current time point *tᵢ* from a state vector at an earlier time point *t*_{*i-*1} and a detection of the object in a current video frame corresponding to the current time point *tᵢ*.

In cases where several objects are tracked and/or the object detector 206 detects a plurality of objects in a video frame, the plurality of object detections are matched to the tracks to find out which object detection should be associated with which track and used to update the state vector of the track. As known in the art this association problem may be solved by applying the Hungarian algorithm or another similar algorithm which finds the optimal associations by minimizing a global association cost for associating the object detections to the tracks.

Returning to the flowchart of Fig. 4, the tracker 204 in step S04 further receives motion vectors 214 from the video encoder 202 which encodes the sequence of video frames 210. As shown in Fig. 5 motion vectors may be received for each or almost each of the successive time points. In this way, the tracker 204 typically has motion vectors available for those time points when a detection of the object is received from the object detector 206.

Now suppose that the tracker 204 is about to estimate the state vector *x^{tⁱ}* at a current time point *tᵢ*. At the current time point *tᵢ* it receives input from the object detector 206 regarding an object detection area in a current video frame corresponding to the current time point *tᵢ*. It further receives motion vectors for the current video frame from the video encoder 202. This is illustrated in Fig. 6 which schematically illustrates motion vectors 602 for the current video frame 600. There is one motion vector 602 for each pixel block used when encoding the current video frame 600. The object detection area 604 where the object was detected is further shown in the current video frame 600. As can be seen there are in this case a more than one pixel block and hence more than one motion vector in the object detection area 604, although it is understood that in other cases there may only be one motion vector in the object detection area 604. As previously explained, each motion vector is indicative of a velocity in the pixel block. Thus, the one or more motion vectors 602 in the object detection area 604 are indicative of a velocity in the object detection area 604 in the current video frame 600. When there is more than one motion vector in the object detection area 604, a representative motion vector can be formed from the motion vectors in the object detection area 604, e.g., by calculating an average of the plurality of motion vectors. The velocity indicated by the representative motion vector can then be used as a measure of the velocity in the object detection area 604 in the video frame 600.

At time points when the tracker 204 both receives a detection 216 of the object 104 from the object detector 206 and motion vectors 214 from the video encoder 202 it decides whether it should stay in the first mode or switch to the second mode. Thus, in the Fig. 5 example the tracker 204 will make such a decision at the current time point *tᵢ*. In order to make the decision, the tracker 204 in step S06 determines a velocity difference between the velocity in the state vector at the earlier time point *t*_{*i-*1} and the velocity indicated by the one or more motion vectors 602 in the object detection area 604 of the current video frame 600. The velocity difference hence measures a deviation between the latest velocity estimated by the tracking filter and the velocity indicated by the motion vectors from the video encoder 202.

The velocity indicated by the one or more motion vectors 602 may be calculated by a rescaling operation, and sometimes also a redirection operation. In more detail, the one or more motion vectors 602 each correspond to a displacement between the current video frame and a reference frame used by the video encoder 202 in the encoding. Therefore calculating the velocity indicated by the or more motion vectors 602 may include dividing the displacement by the temporal distance between the current video frame and the reference frame. For example, if the reference frame is the directly preceding video frame in the sequence of video frames and the frame rate is 30 frames per second, the temporal distance is 1/30 seconds. When there are several motion vectors in the object detection area 604, the displacement of the representative motion vector may be used in the calculations. Moreover, it is noted that the motion vectors points from blocks in the current video frame to blocks in the reference frame. Thus, in cases where the reference frame is a previous video frame in the video sequence, the motion vectors point back to blocks in a previous frame. When the reference frame is a previous video frame in the video sequence, calculating the velocity indicated by the or more motion vectors 602 may therefore further include reversing the direction of the motion vectors 602. Reversing the direction of the motion vectors is however not needed when the reference frame is a later video frame in the sequence.

In situations where the video encoder 202 operates at a higher frame rate than the tracker 204 motion vectors from several frames may be accumulated to determine the one or more motion vectors in the object detection area of the current video frame corresponding to time *tᵢ*. In particular, motion vectors from all video frames encoded since the previous time point *t*_{*i-*1} may be accumulated, i.e., added together. In that case the velocity indicated by the one or more motion vectors may be calculated by dividing the accumulated motion vectors by the time difference between time points *tᵢ* and *t*_{*i*-1}.

Next, at the decision point in step S07, the velocity difference determined at the current time point *tᵢ* is compared to a velocity threshold. In case the velocity difference is equal to or below the velocity threshold, the tracker 204 decides to keep operating the tracking filter in the first mode and it therefore returns to step S02. In case the velocity difference instead is larger than the velocity threshold, the tracker 204 proceeds to step S08.

In order to set a suitable velocity threshold, the disclosed tracking method may be applied with different values of the velocity threshold to test video sequences that are representative of the type of situations one wants to use the method for. The performance of the tracking may be evaluated for each velocity threshold, for example by using an object tracking metric such as the higher order tracking accuracy (HOTA) metric. A suitable velocity threshold may then be selected as the velocity threshold that results in the best tracking performance.

In the Fig. 5 example, the tracking filter operates in the first mode starting from time point *t*₁. At time point *t*₃ it receives a detection 216 of the object from the object detector 206 and motion vectors 214 from the video encoder 202 and determines a velocity difference. At time *t*₃ the velocity difference is equal to or below the velocity threshold and therefore the tracking filter is kept in the first mode and the method returns to step S02. This is then repeated for the successive time points until a time point *tᵢ* is reached at which the determined velocity difference instead is above the velocity threshold. At that time point the method instead proceeds to step S08.

In step S08, the tracker 204 switches from operating the tracking filter in the first mode to operating the tracking filter in the second mode. In the second mode the tracking filter estimates a state vector describing position, velocity, and acceleration of the object in the video frames. The switch takes place at the current time point *tᵢ*.

The switch from the first to the second mode involves switching the state space model used by the tracking filter from the first state space model which models position and velocity of the object, to the second state space model which additionally models acceleration of the object. Thus, the switch includes switching from a state vector which includes position and velocity states to a state vector which additionally includes an acceleration state. It also includes switching the motion model and measurement model.

The switch may be achieved by extending the state vector at the current time point *tᵢ* with an acceleration state which describes the acceleration of the object. Upon extending the state vector, the estimates of the position and the velocity in the state vector may be kept while an acceleration state is added to the state vector. When adding the acceleration state it has to be set to some initial value. There are several options for how to set the initial value at the current time point *tᵢ*. One option is to simply initialize the acceleration state to zero. Another option is to initialize the acceleration state to an acceleration that corresponds to the velocity difference. The velocity difference is a measure of how much the velocity of the object has changed between the earlier time point *t*_{*i-*1} and the current time point *tᵢ*. Dividing the velocity difference by the temporal distance between those time points hence provides an estimate of the acceleration which can be used to initialize the acceleration state. Yet another option is to initialize the acceleration state such that the state vector at the earlier time point *t*_{*i-*1} together with the acceleration state results in a predicted state vector at the current time point *tᵢ* that matches the detection of the object in the current video frame. The prediction is in this case obtained by applying the motion model of the second state space model to the state vector at the earlier time point *t*_{*i-*1} extended by the acceleration state. The acceleration state may be found by setting up and solving a system of equations. In more detail, by applying the state transition matrix of the second state space model to the state vector at the earlier time point *t*_{*i-*1} extended by the unknown acceleration state, an expression for the predicted position of the object in the current video frame may be derived. By setting this expression equal the position of the object in the current video according to the object detection one arrives at a system of equations that may be solved for the unknown acceleration state. In a variant, it is not required that the predicted state vector obtained from the state vector at the earlier time point *t*_{*i-*1} together with the acceleration state exactly matches the detection of the object in the current video frame. Instead, a certain deviation may be allowed to take the uncertainty of the object detections into account. For example, another target for that predicted state vector may be set up. That target may be between the detection of the object in the current video frame and a predicted position of the object resulting from the state vector at the earlier time point *t*_{*i-*1} without the acceleration state. The more certain the detection of the object is, the closer the target is set to the detection of the object, and vice versa.

As previously mentioned, the tracking filter estimates the state vector at the current time point *tᵢ* by first predicting the state vector at the current time point *tᵢ* from the state vector at the earlier time point *t*_{*i*-1}, and then updating the predicted state vector in view of the detection of the object in the current video frame. In some embodiments the switch from the first mode to the second mode takes place after the prediction, but before updating the predicted state vector. In such embodiments, the first state space model is used for the prediction at the current time point *tᵢ* and the second state space model, including the extended state vector, is used to update the predicted state vector at the current time point *tᵢ*. In this way, the second mode starts to have effect on the state vector estimate already at the current time point, thus allowing the tracking filter to start adapting immediately to the sudden velocity change. In other embodiments, the switch from the first mode to the second mode takes place after updating the predicted state vector in view of the detection of the object at the current time point *tᵢ*. In this case, the first state space model is used for both the prediction and updating at the current time point *tᵢ* and the second state space model, including the extended state vector, is used when estimating the state vector after the current time point *tᵢ*.

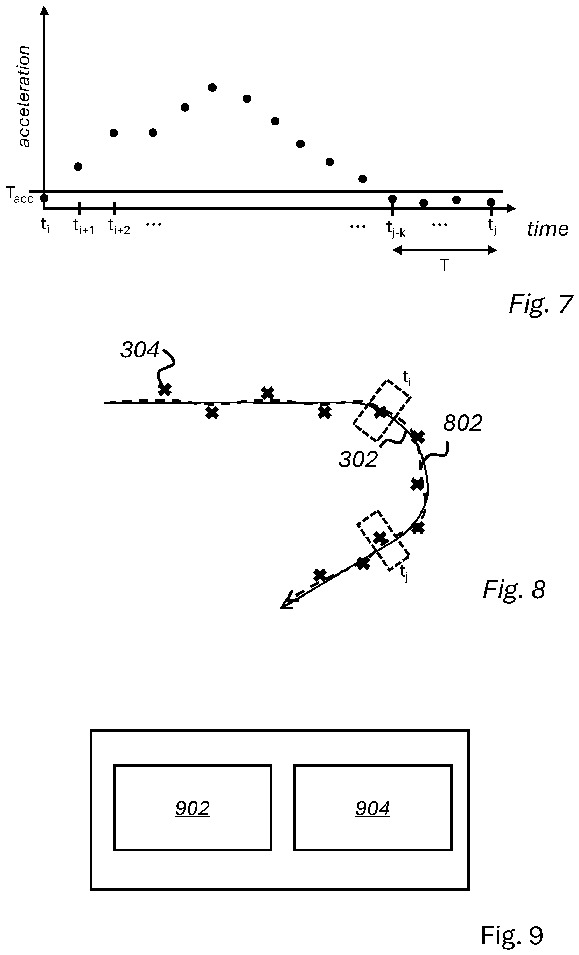

After the switch at the current time point *tᵢ* the tracking filter is operating in the second mode. In the second mode, the tracking filter uses the second state space model to perform prediction of the state vector between successive time points, and updating the state vector in view of a detection of the object as previously described. When operating in the second mode, the tracker 204 in step S10 monitors the acceleration in the estimated state vector. The acceleration may be monitored at each successive time point in order to determine when it is time to switch back to the first mode. For example, it may monitor the magnitude of the acceleration. Fig. 7 schematically illustrates the magnitude of the acceleration in the estimated state vector as the tracking filter operates in the second mode. The acceleration starts at an initial value at time *tᵢ* and then increases before it at time *t*_{*j*-*k*} decreases below an acceleration threshold T_{acc} and stays below the threshold T_{acc} until time *tⱼ*.

At each successive time point, the tracker 204 in step S11 checks whether the acceleration has stabilized at a level below the acceleration threshold. For example, the tracker 204 may determine that the acceleration has stabilized at a level below the acceleration threshold when the acceleration in the state vector has been below the acceleration threshold for a predetermined time period. In the example of Fig. 7, the acceleration falls below the acceleration threshold T_{acc} at time *t*_{*j*-*k*}. However, it is not determined to have stabilized at a level below the threshold T_{acc} until time *tⱼ* when it has been below the acceleration threshold T_{acc} for a predetermined time period T.

If it is determined that the acceleration has not stabilized at a time point, the tracker 204 keeps operating the tracking filter in the second mode and monitoring the acceleration, i.e., it returns to step S10. If it is instead determined that the acceleration has stabilized at a time point, the tracker 204 proceeds to step S12 in which it switches from operating filter in the second mode to operating the tracking filter in the first mode whereafter it returns to step S02 of the method. In the example of Figs 5 and 7, the tracking filter hence switches from the second mode to the first mode at time *tⱼ*.

The switch from the second mode to the second mode to the first mode includes switching from the second state space model to the first state space model. This includes removing acceleration state describing the acceleration of the object from the state vector. The current estimates of position and velocity in the state vector may however be left unchanged.

Similar to the velocity threshold, suitable values for the acceleration threshold and/or the time period T may be set by applying the disclosed method with different acceleration thresholds and/or time periods to test video sequences and evaluating the tracking performance by using an object tracking metric. A suitable acceleration threshold and/or time period T may then be selected as the one or ones that result in the best tracking performance.

Fig. 8 schematically illustrates the effect of the invention in the context of the example of Fig. 3. As before, the solid line 302 illustrates the true track of the object, and the cross-signs 304 illustrates detected positions of the object. The dashed line 802 is the track provided by the tracker 204. The tracker 204 starts by operating the tracking filter in the first mode. While in the first mode it gives a smooth estimate of the position of the object. At time point *tᵢ* it finds that the velocity difference between the estimated velocity at the previous time point and the velocity indicated by the one or more motion vectors in the object detection area of the current video frame exceeds the velocity threshold. As a result, it switches from operating the tracking filter in the first mode to the second mode at time *tᵢ*. This makes the tracking filter more responsive to velocity changes, in this case the directional change, of the object. The tracking filter is then operated in the second mode until time point *tⱼ* when it is determined that the acceleration has stabilized at a low level, and the tracking filter is switched back at time *tⱼ* to operate in the first mode.

In the system shown in Fig. 2, the video encoder 202, the tracker 204 (i.e., the device for tracking an object in a sequence of video frames), and the object detector 206 may comprising circuitry configured to implement their respective functionalities.

Fig. 9 shows the device 204 in more detail. It comprises, circuitry 902, such as a processing circuitry. It may further comprise a memory 904.

The circuitry may be in the form of a processor, such as a microprocessor or central processing uit, which in association with computer code instructions stored on a (non-transitory) computer-readable medium, such as the memory 904, causes the device 204 to carry out any method disclosed herein. The memory 904 may be non-volatile memory. Examples of non-volatile memory include read-only memory, flash memory, ferroelectric RAM, magnetic computer storage devices, optical discs, and the like.

In another implementation, the circuitry is dedicated and specifically designed to carryout any method herein. The circuitry may be in the form of one or more integrated circuits, such as one or more application specific integrated circuits or one or more field-programmable gate arrays.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method for tracking an object in a sequence of video frames, comprising:
tracking (S02) an object (104) in a sequence of video frames (210) by operating a tracking filter in a first mode in which it estimates a state vector describing a position and velocity of the object in the video frames,
wherein the tracking filter estimates a state vector at a current time point from a state vector at an earlier time point and a detection (216) of the object in a current video frame corresponding to the current time point,
receiving (S04), from a video encoder (202) which encodes the sequence of video frames, one or more motion vectors (214) indicative of velocity in an object detection area (604) of the current video frame that corresponds to the detection of the object,
determining (S06) a velocity difference between the velocity in the state vector at the earlier time point and the velocity indicated by the one or more motion vectors in the object detection area of the current video frame, and
in response to the velocity difference being larger than a velocity threshold, switching (S08) from operating the tracking filter in the first mode to operating the tracking filter in a second mode at the current time point, wherein the tracking filter in the second mode estimates a state vector describing position, velocity, and acceleration of the object in the video frames.

2. The method of claim 1, wherein switching from operating the tracking filter in the first mode to operating the tracking filter in the second mode at the current time point includes extending the state vector at the current time point with an acceleration state describing the acceleration of the object.

3. The method of claim 2, wherein the acceleration state is initialized at the current time point to an acceleration that corresponds to the velocity difference.

4. The method of claim 2, wherein the acceleration state is initialized such that the state vector at the earlier time point together with the acceleration state results in a predicted state vector at the current time point that matches the detection of the object in the current video frame.

5. The method of any one of claims 2-4, wherein the extended state vector is used when estimating the state vector after the current time point.

6. The method of any one of the preceding claims, wherein the tracking filter uses a motion model for predicting a state vector from a time point to a successive time point, wherein the motion model is a constant velocity motion model in the first mode and a constant acceleration motion model in the second mode.

7. The method of claim 6, wherein, if a detection of the object is made in a successive video frame corresponding to the successive time point, the tracking filter updates the predicted state vector at the successive time point in view of the detection of the object in the successive video frame in each of the first and the second mode.

8. The method of claim 1, wherein the velocity indicated by the one or more vectors in the object detection area of the current video frame is a velocity indicated by a representative motion vector of the one or more motion vectors.

9. The method of any one of the preceding claims, wherein the one or more motion vectors correspond to a displacement between the current video frame and a reference frame used by the video encoder in the encoding, and wherein the method further comprises calculating the velocity indicated by the one or more motion vectors by dividing the displacement by the temporal distance between the current video frame and the reference frame.

10. The method of any one of the preceding claims, further comprising:
monitoring the acceleration in the estimated state vector when the tracking filter is operating in the second mode, and
switching from operating the tracking filter in the second mode to operating the tracking filter in the first mode in response to the acceleration in the estimated state vector having stabilized at a level below an acceleration threshold (T_{acc}).

11. The method of claim 10, wherein the acceleration is determined to have stabilized at a level below the acceleration threshold when the acceleration in the state vector has been below the acceleration threshold for a predetermined time period.

12. The method of claim 10 or 11, wherein switching from operating the tracking filter in the second mode to operating the tracking filter in the first mode includes removing an acceleration state describing the acceleration of the object from the state vector.

13. A device for tracking an object in a sequence of video frames, comprising circuitry configured to:
track an object in a sequence of video frames (210) by operating a tracking filter in a first mode in which it estimates a state vector describing a position and velocity of the object in the video frames,
wherein the tracking filter estimates a state vector at a current time point from a state vector at an earlier time point and a detection (216) of the object in a current video frame corresponding to the current time point,
receive, from a video encoder (202) which encodes the sequence of video frames, one or more motion vectors (214) indicative of velocity in an object detection area of the current video frame that corresponds to the detection of the object,
determine a velocity difference between the velocity in the state vector at the earlier time point and the velocity indicated by the one or more motion vectors in the object detection area of the current video frame, and
in response to the velocity difference being larger than a velocity threshold, switch from operating the tracking filter in the first mode to operating the tracking filter in a second mode at the current time point, wherein the tracking filter in the second mode estimates a state vector describing position, velocity, and acceleration of the object in the video frames.

14. A system for tracking an object in a sequence of video frames, comprising:
a video encoder (202) configured to encode the sequence of video frames and produce motion vectors (214) indicative of velocity in different areas of the video frames,
an object detector (206) configured to detect an object in video frames of the sequence of video frames, and
a device (204) for tracking an object in a sequence of video frames according to claim 13, wherein the device receives motion vectors from the video encoder and object detections (216) from the object detector.

15. A non-transitory computer-readable medium comprising computer program code which, when executed by a device with processing capability, causes the device to carry out the method of any one of claims 1-12.

## Patentansprüche

1. Verfahren zum Verfolgen eines Objekts in einer Sequenz von Video-Frames, das Folgendes umfasst:
Verfolgen (S02) eines Objekts (104) in einer Sequenz von Video-Frames (210) durch Betreiben eines Verfolgungsfilters in einem ersten Modus, in dem es einen Zustandsvektor schätzt, der eine Position und Geschwindigkeit des Objekts in den Video-Frames beschreibt,
wobei das Verfolgungsfilter einen Zustandsvektor zu einem aktuellen Zeitpunkt aus einem Zustandsvektor zu einem früheren Zeitpunkt und einer Detektion (216) des Objekts in einem aktuellen Video-Frame, der dem aktuellen Zeitpunkt entspricht, schätzt,
Empfangen (S04), von einem Videocodierer (202), der die Sequenz von Video-Frames codiert, eines oder mehrerer Bewegungsvektoren (214), die eine Geschwindigkeit in einem Objektdetektionsbereich (604) des aktuellen Video-Frames angeben, der der Detektion des Objekts entspricht,
Bestimmen (S06) einer Geschwindigkeitsdifferenz zwischen der Geschwindigkeit in dem Zustandsvektor zu dem früheren Zeitpunkt und der Geschwindigkeit, die durch den einen oder die mehreren Bewegungsvektoren in dem Objektdetektionsbereich des aktuellen Video-Frames angegeben wird, und
als Reaktion darauf, dass die Geschwindigkeitsdifferenz größer als eine Geschwindigkeitsschwelle ist, Umschalten (S08) vom Betreiben des Verfolgungsfilters in dem ersten Modus zum Betreiben des Verfolgungsfilters in einem zweiten Modus zu dem aktuellen Zeitpunkt, wobei das Verfolgungsfilter in dem zweiten Modus einen Zustandsvektor schätzt, der Position, Geschwindigkeit und Beschleunigung des Objekts in den Video-Frames beschreibt.

2. Verfahren nach Anspruch 1, wobei das Umschalten vom Betreiben des Verfolgungsfilters in dem ersten Modus zum Betreiben des Verfolgungsfilters in dem zweiten Modus zu dem aktuellen Zeitpunkt Erweitern des Zustandsvektors zu dem aktuellen Zeitpunkt mit einem Beschleunigungszustand, der die Beschleunigung des Objekts beschreibt, beinhaltet.

3. Verfahren nach Anspruch 2, wobei der Beschleunigungszustand zu dem aktuellen Zeitpunkt auf eine Beschleunigung initialisiert wird, die der Geschwindigkeitsdifferenz entspricht.

4. Verfahren nach Anspruch 2, wobei der Beschleunigungszustand so initialisiert wird, dass der Zustandsvektor zu dem früheren Zeitpunkt zusammen mit dem Beschleunigungszustand zu einem vorhergesagten Zustandsvektor zu dem aktuellen Zeitpunkt führt, der mit der Detektion des Objekts in dem aktuellen Video-Frame übereinstimmt.

5. Verfahren nach einem der Ansprüche 2-4, wobei der erweiterte Zustandsvektor verwendet wird, wenn der Zustandsvektor nach dem aktuellen Zeitpunkt geschätzt wird.

6. Verfahren nach einem der vorhergehenden Ansprüche, wobei das Verfolgungsfilter ein Bewegungsmodell zum Vorhersagen eines Zustandsvektors von einem Zeitpunkt zu einem darauffolgenden Zeitpunkt verwendet, wobei das Bewegungsmodell ein Bewegungsmodell mit konstanter Geschwindigkeit in dem ersten Modus und ein Bewegungsmodell mit konstanter Beschleunigung in dem zweiten Modus ist.

7. Verfahren nach Anspruch 6, wobei, falls eine Detektion des Objekts in einem darauffolgenden Video-Frame vorgenommen wird, der dem darauffolgenden Zeitpunkt entspricht, das Verfolgungsfilter den vorhergesagten Zustandsvektor zu dem darauffolgenden Zeitpunkt in Hinblick auf die Detektion des Objekts in dem darauffolgenden Video-Frame in sowohl dem ersten als auch dem zweiten Modus aktualisiert.

8. Verfahren nach Anspruch 1, wobei die Geschwindigkeit, die durch den einen oder die mehreren Vektoren in dem Objektdetektionsbereich des aktuellen Video-Frames angegeben wird, eine Geschwindigkeit ist, die durch einen repräsentativen Bewegungsvektor des einen oder der mehreren Bewegungsvektoren angegeben wird.

9. Verfahren nach einem der vorhergehenden Ansprüche, wobei der eine oder die mehreren Bewegungsvektoren einer Verschiebung zwischen dem aktuellen Video-Frame und einem Referenz-Frame entsprechen, der durch den Videocodierer bei der Codierung verwendet wird, und wobei das Verfahren ferner Berechnen der Geschwindigkeit umfasst, die durch den einen oder die mehreren Bewegungsvektoren angegeben wird, indem die Verschiebung durch die zeitliche Entfernung zwischen dem aktuellen Video-Frame und dem Referenz-Frame geteilt wird.

10. Verfahren nach einem der vorhergehenden Ansprüche, das ferner Folgendes umfasst:
Überwachen der Beschleunigung in dem geschätzten Zustandsvektor, wenn das Verfolgungsfilter in dem zweiten Modus arbeitet, und
Umschalten vom Betreiben des Verfolgungsfilters in dem zweiten Modus zum Betreiben des Verfolgungsfilters in dem ersten Modus als Reaktion darauf, dass sich die Beschleunigung in dem geschätzten Zustandsvektor auf einem Niveau unterhalb einer Beschleunigungsschwelle (T_{acc}) stabilisiert hat.

11. Verfahren nach Anspruch 10, wobei bestimmt wird, dass sich die Beschleunigung auf einem Niveau unterhalb der Beschleunigungsschwelle stabilisiert hat, wenn die Beschleunigung in dem Zustandsvektor für eine vorbestimmte Zeitdauer unterhalb der Beschleunigungsschwelle lag.

12. Verfahren nach Anspruch 10 oder 11, wobei das Umschalten vom Betreiben des Verfolgungsfilters in dem zweiten Modus zum Betreiben des Verfolgungsfilters in dem ersten Modus Entfernen eines Beschleunigungszustands, der die Beschleunigung des Objekts beschreibt, aus dem Zustandsvektor beinhaltet.

13. Vorrichtung zum Verfolgen eines Objekts in einer Sequenz von Video-Frames, welche eine Schaltungsanordnung umfasst, die zu Folgendem konfiguriert ist:
Verfolgen eines Objekts in einer Sequenz von Video-Frames (210) durch Betreiben eines Verfolgungsfilters in einem ersten Modus, in dem es einen Zustandsvektor schätzt, der eine Position und Geschwindigkeit des Objekts in den Video-Frames beschreibt,
wobei das Verfolgungsfilter einen Zustandsvektor zu einem aktuellen Zeitpunkt aus einem Zustandsvektor zu einem früheren Zeitpunkt und einer Detektion (216) des Objekts in einem aktuellen Video-Frame, der dem aktuellen Zeitpunkt entspricht, schätzt,
Empfangen, von einem Videocodierer (202), der die Sequenz von Video-Frames codiert, eines oder mehrerer Bewegungsvektoren (214), die eine Geschwindigkeit in einem Objektdetektionsbereich des aktuellen Video-Frames angeben, der der Detektion des Objekts entspricht,
Bestimmen einer Geschwindigkeitsdifferenz zwischen der Geschwindigkeit in dem Zustandsvektor zu dem früheren Zeitpunkt und der Geschwindigkeit, die durch den einen oder die mehreren Bewegungsvektoren in dem Objektdetektionsbereich des aktuellen Video-Frames angegeben wird, und
als Reaktion darauf, dass die Geschwindigkeitsdifferenz größer als eine Geschwindigkeitsschwelle ist, Umschalten vom Betreiben des Verfolgungsfilters in dem ersten Modus zum Betreiben des Verfolgungsfilters in einem zweiten Modus zu dem aktuellen Zeitpunkt, wobei das Verfolgungsfilter in dem zweiten Modus einen Zustandsvektor schätzt, der Position, Geschwindigkeit und Beschleunigung des Objekts in den Video-Frames beschreibt.

14. System zum Verfolgen eines Objekts in einer Sequenz von Video-Frames, das Folgendes umfasst:
einen Videocodierer (202), der dazu konfiguriert ist, die Sequenz von Video-Frames zu codieren und Bewegungsvektoren (214) zu erzeugen, die eine Geschwindigkeit in verschiedenen Bereichen der Video-Frames angeben,
einen Objektdetektor (206), der dazu konfiguriert ist, ein Objekt in Video-Frames der Sequenz von Video-Frames zu detektieren, und
eine Vorrichtung (204) zum Verfolgen eines Objekts in einer Sequenz von Video-Frames nach Anspruch 13, wobei die Vorrichtung Bewegungsvektoren von dem Videocodierer und Objektdetektionen (216) von dem Objektdetektor empfängt.

15. Nichttransitorisches computerlesbares Medium, das Computerprogrammcode umfasst, der, wenn er durch eine Vorrichtung mit einer Verarbeitungsfähigkeit ausgeführt wird, die Vorrichtung zum Ausführen des Verfahren nach einem der Ansprüche 1-12 veranlasst.

## Revendications

1. Procédé de suivi d'un objet dans une séquence de trames vidéo, comprenant :
le suivi (S02) d'un objet (104) dans une séquence de trames vidéo (210) en exploitant un filtre de suivi dans un premier mode dans lequel il estime un vecteur d'état décrivant une position et une vitesse de l'objet dans les trames vidéo,
le filtre de suivi estimant un vecteur d'état à un instant courant à partir d'un vecteur d'état à un instant antérieur et d'une détection (216) de l'objet dans une trame vidéo courante correspondant à l'instant courant,
la réception (S04), en provenance d'un codeur vidéo (202) qui code la séquence de trames vidéo, d'un ou de plusieurs vecteurs (214) de mouvement indicatifs d'une vitesse dans une zone (604) de détection d'objet de la trame vidéo courante qui correspond à la détection de l'objet,
la détermination (S06) d'une différence de vitesse entre la vitesse dans le vecteur d'état à l'instant antérieur et la vitesse indiquée par le ou les vecteurs de mouvement dans la zone de détection d'objet de la trame vidéo courante, et
en réaction au fait que la différence de vitesse soit supérieure à un seuil de vitesse, le passage (S08) de l'exploitation du filtre de suivi dans le premier mode à l'exploitation du filtre de suivi dans un second mode à l'instant courant, le filtre de suivi dans le second mode estimant un vecteur d'état décrivant la position, la vitesse et l'accélération de l'objet dans les trames vidéo.

2. Procédé selon la revendication 1, le passage de l'exploitation du filtre de suivi dans le premier mode à l'exploitation du filtre de suivi dans le second mode à l'instant courant comprenant l'extension du vecteur d'état à l'instant courant avec un état d'accélération décrivant l'accélération de l'objet.

3. Procédé selon la revendication 2, l'état d'accélération étant initialisé à l'instant courant à une accélération qui correspond à la différence de vitesse.

4. Procédé selon la revendication 2, l'état d'accélération étant initialisé de telle sorte que le vecteur d'état à l'instant antérieur conjointement avec l'état d'accélération donne un vecteur d'état prédit à l'instant courant qui correspond à la détection de l'objet dans la trame vidéo courante.

5. Procédé selon l'une quelconque des revendications 2 à 4, le vecteur d'état étendu étant utilisé lors de l'estimation du vecteur d'état après l'instant courant.

6. Procédé selon l'une quelconque des revendications précédentes, le filtre de suivi utilisant un modèle de mouvement pour prédire un vecteur d'état d'un instant à un instant subséquent, le modèle de mouvement étant un modèle de mouvement à vitesse constante dans le premier mode et un modèle de mouvement à accélération constante dans le second mode.

7. Procédé selon la revendication 6, dans lequel, si une détection de l'objet est effectuée dans une trame vidéo subséquente correspondant à l'instant subséquent, le filtre de suivi met à jour le vecteur d'état prédit à l'instant subséquent compte tenu de la détection de l'objet dans la trame vidéo subséquente dans chacun des premier et second modes.

8. Procédé selon la revendication 1, la vitesse indiquée par le ou les vecteurs dans la zone de détection d'objet de la trame vidéo courante étant une vitesse indiquée par un vecteur de mouvement représentatif du ou des vecteurs de mouvement.

9. Procédé selon l'une quelconque des revendications précédentes, le ou les vecteurs de mouvement correspondant à un déplacement entre la trame vidéo courante et une trame de référence utilisée par le codeur vidéo dans le codage, et le procédé comprenant en outre le calcul de la vitesse indiquée par le ou les vecteurs de mouvement en divisant le déplacement par la distance temporelle entre la trame vidéo courante et la trame de référence.

10. Procédé selon l'une quelconque des revendications précédentes, comprenant en outre :
la surveillance de l'accélération dans le vecteur d'état estimé lorsque le filtre de suivi fonctionne dans le second mode, et
le passage de l'exploitation du filtre de suivi dans le second mode à l'exploitation du filtre de suivi dans le premier mode en réaction au fait que l'accélération dans le vecteur d'état estimé se soit stabilisée à un niveau inférieur à un seuil d'accélération (T_{acc}).

11. Procédé selon la revendication 10, l'accélération étant déterminée comme s'étant stabilisée à un niveau inférieur au seuil d'accélération lorsque l'accélération dans le vecteur d'état a été inférieure au seuil d'accélération pendant un laps de temps prédéterminé.

12. Procédé selon la revendication 10 ou 11, le passage de l'exploitation du filtre de suivi dans le second mode à l'exploitation du filtre de suivi dans le premier mode comprenant le fait de retirer du vecteur d'état un état d'accélération décrivant l'accélération de l'objet.

13. Dispositif de suivi d'un objet dans une séquence de trames vidéo, comprenant une circuiterie configurée pour :
suivre un objet dans une séquence de trames vidéo (210) en exploitant un filtre de suivi dans un premier mode dans lequel il estime un vecteur d'état décrivant une position et une vitesse de l'objet dans les trames vidéo, le filtre de suivi estimant un vecteur d'état à un instant courant à partir d'un vecteur d'état à un instant antérieur et d'une détection (216) de l'objet dans une trame vidéo courante correspondant à l'instant courant, recevoir, en provenance d'un codeur vidéo (202) qui code la séquence de trames vidéo, un ou plusieurs vecteurs (214) de mouvement indicatifs d'une vitesse dans une zone de détection d'objet de la trame vidéo courante qui correspond à la détection de l'objet,
déterminer une différence de vitesse entre la vitesse dans le vecteur d'état à l'instant antérieur et la vitesse indiquée par le ou les vecteurs de mouvement dans la zone de détection d'objet de la trame vidéo courante, et
en réaction au fait que la différence de vitesse soit supérieure à un seuil de vitesse, passer de l'exploitation du filtre de suivi dans le premier mode à l'exploitation du filtre de suivi dans un second mode à l'instant courant, le filtre de suivi dans le second mode estimant un vecteur d'état décrivant la position, la vitesse et l'accélération de l'objet dans les trames vidéo.

14. Système de suivi d'un objet dans une séquence de trames d'images, comprenant :
un codeur vidéo (202) configuré pour coder la séquence de trames vidéo et produire des vecteurs (214) de mouvement indicatifs de la vitesse dans différentes zones des trames vidéo,
un détecteur (206) d'objet configuré pour détecter un objet dans des trames vidéo de la séquence de trames vidéo, et
un dispositif (204) de suivi d'un objet dans une séquence de trames vidéo selon la revendication 13, le dispositif recevant des vecteurs de mouvement en provenance du codeur vidéo et des détections (216) d'objet en provenance du détecteur d'objet.

15. Support non transitoire lisible par ordinateur comprenant un code de programme informatique qui, lorsqu'il est exécuté par un dispositif doté d'une capacité de traitement, amène le dispositif à réaliser le procédé de l'une quelconque des revendications 1 à 12.
